# EUROPÄISCHE PATENTSCHRIFT

(11) **EP 2 263 026 B1**
(45) Veröffentlichungstag und Bekanntmachung des Hinweises auf die Patenterteilung: **28.05.2014**
(21) Anmeldenummer: 09732451.1
(22) Anmeldetag: 07.03.2009
(51) Int. Cl.: F16H 61/04, F16H 63/50, B60W 30/18, F02D 41/02, F02D 37/02, F16H 61/682, B60W 10/06, B60W 10/10

(54) **VERFAHREN ZUR SOUNDMODELLIERUNG BEI RÜCKSCHALTUNGEN MIT ZWISCHENGAS**
METHOD FOR SOUND MODELING FOR DOWNSHIFTING WITH INTERMEDIATE GAS
PROCÉDÉ DE MODÉLISATION SONORE EN CAS DE RÉTROGRADATION AVEC DOUBLE DÉBRAYAGE

(30) Priorität: 16.04.2008 DE 102008018969
(43) Veröffentlichungstag der Anmeldung: 22.12.2010
(73) Patentinhaber: Daimler AG, 70327 Stuttgart (DE)
(72) Erfinder: KÖRNER, Marko, 71397 Leutenbach (DE)
(74) Vertreter: JENSEN & SON
(86) Internationale Anmeldenummer: PCT/EP2009/001646
(87) Internationale Veröffentlichungsnummer: WO 2009/127296

(56) Entgegenhaltungen:
- EP-A- 1 647 691
- WO-A-02/078997
- WO-A-2005/093238
- DE-A1- 19 731 728

## Beschreibung

Die Erfindung betrifft ein Verfahren zur Steuerung von Schaltvorgängen eines Kraftfahrzeugs mit einem Verbrennungsmotor und einem automatischen Getriebe, wobei bei einem Rückschaltvorgang automatisch Zwischengas gegeben wird.

Bei automatischen Getrieben treten bei Rückschaltvorgängen Schaltrucke auf, die den Fahrkomfort, die Lebensdauer des Getriebes und insbesondere bei sehr engagierter Fahrweise bei hohen Querbeschleunigungen die Fahrstabilität des Fahrzeugs beeinträchtigen.

Aus der EP 1 647 691 A1, die als der nächste Stand der Technik angesehen wird und die Merkmale des Oberbegriffs des Anspruchs 1 offenbart, ist es bekannt, dass zur Reduzierung und/oder zur Kompensierung des Schalt-Ruckes bei einem Rückschaltvorgang automatisch Zwischengas gegeben wird. Dabei wird während des Schaltvorganges die Drehzahl des Motors auf die Drehzahl erhöht, die nach dem Rückschaltvorgang vom Getriebe verlangt wird.

Nachteilig ist bei den im Stand der Technik bekannten Verfahren zur Reduzierung und/oder zur Kompensierung des Schalt-Ruckes, dass Rückschaltvorgänge nur unzureichend akustisch wahrnehmbar sind. Dieser Nachteil Ist insbesondere bei sehr laufruhigen Motoren zu verzeichnen.

Der Erfindung liegt daher die Aufgabe zugrunde, ein verbessertes Verfahren zur Reduzierung und/oder zur Kompensierung des Schalt-Ruckes bei einem Rückschaltvorgang anzugeben. Insbesondere soll das verbesserte Verfahren Rückschaltvorgänge akustisch deutlich darstellen.

Erfindungsgemäß gelingt die Lösung dieser Aufgabe mit einem Verfahren mit den Merkmalen des Anspruchs 1.

Ausgestaltungen des erfindungsgemäßen Verfahrens sind Gegenstand der Unteransprüche.

Bei dem erfindungsgemäßen Verfahren zur Steuerung von Schaltvorgängen eines Kraftfahrzeugs mit einem Verbrennungsmotor und einem automatischen Getriebe wird zur Reduzierung und/oder Kompensierung eines Schalt-Ruckes bei einem Rückschaltvorgang automatisch Zwischengas gegeben.

Dabei wird in einer ersten Phase, in der sich das Getriebe in seiner hydraulischen Totzeit befindet, das vom Motor gelieferte Istmoment langsam gesteigert, bis ein vom Getriebe gefordertes Moment erreicht ist. Diese erste Phase wird auch als Füllphase oder als langsames Anbrennen des Motors bezeichnet.

Anschließend wird in einer zweiten Phase, in der das vom Motor gelieferte Istmoment noch kleiner ist als ein Sollmoment des Motors, eine Drosselklappe weiter geöffnet. Diese zweite Phase wird auch als erste Regelphase bezeichnet und dient der Synchronisation. Während dieser zweiten Phase ist im Interesse eines schnellen Schaltvorganges ein schnellstmöglicher Aufbau des vom Motor gelieferten Istmoments angestrebt, das heißt, das Sollmoment des Motors ist besonders groß, vorzugsweise maximal. Um einen schnellstmöglichen Aufbau des Moments zu ermöglichen, wird während der zweiten Phase eine Momentenreserve, auch als Reservevorhalt bezeichnet, gefordert.

Erfindungsgemäß wird anschließend in einer dritten Phase, die wie die zweite Phase der Synchronisation dient und in der das Istmoment des Motors dessen zur Synchronisation erforderliches Solimoment erreicht, ein später Zündzeitpunkt eingestellt. Das heißt, der Zündwinkel wird stark in Richtung spät verschoben. Insbesondere wird in der dritten Phase der Zündzeitpunkt zumindest zeitweise später als bei einem Kurbelwellenwinkel von +5° vor dem oberen Totpunkt und besonders bevorzugt wird ein Zündzeitpunkt nach dem oberen Totpunkt, beispielsweise bei einem Kurbelwellenwinkel von -10° eingestellt. Durch die starke Verschiebung des Zündwinkels, also des Zündzeitpunktes in Richtung spät, wird vom Motor ein akustisch deutlich wahrnehmbares Geräusch, insbesondere ein sehr sportlicher Sound, generiert. Um diesen sportlichen Sound zu erzeugen, wird eine zusätzliche Momentenreserve gefordert, wodurch die Verschiebung des Zündwinkels, also des Zündzeitpunktes in Richtung spät, erzielt wird. Es ist zudem möglich, in der dritten Phase die Einspritzung für einen oder mehrere Zylinder auszublenden.

Durch das erfindungsgemäße Verfahren können sportliche Eigenschaften des Fahrzeugs akustisch hervorgehoben werden. Dabei kann das akustisch deutlich wahrnehmbare Geräusch, insbesondere ein sehr sportlicher Sound, für unterschiedliche Fahrprogramme eines Fahrzeugs oder für unterschiedliche Fahrzeugklassen auf einfache Weise differenziert werden.

Das erfindungsgemäße Verfahren sieht vor, dass in einer vierten Phase ein oder mehrere Zylinder des Motors ausgeblendet werden, das heißt, dass die Zündung und/oder die Einspritzung von Treibstoff vollständig abgeschaltet werden. In der vierten Phase, die auch als Nachlaufphase bezeichnet wird, ist die Motordrehzahl synchronisiert und der Motor muss schnellstmöglich entweder auf ein vom Fahrer des Fahrzeugs vorgegebenes Moment, auch als Fahrervorgabemoment bezeichnet, oder auf Schubabschaltung gebracht werden. Die schnellstmögliche Einstellung des Moments des Motors erfolgt vorzugsweise über einen Zündungspfad.

Durch die Ausblendung eines oder mehrerer Zylinder kann ein akustisch besonders deutlich wahrnehmbares Geräusch, insbesondere ein sehr sportlicher Sound, erzeugt werden. Durch die Ausblendung eines oder mehrerer Zylinder kann insbesondere eine Reduzierung der vom automatischen Zwischengas erhöhten Drehzahl des Motors auf die zur Synchronisation erforderliche Drehzahl erfolgen. Insofern ist es möglich, ein lediglich zur Geräuschgenerierung erfolgtes zusätzliches Maß des Zwischengases auf das zur Synchronisation erforderliche Maß zu korrigieren. Durch die Abschaltung der Zündung ist es zudem möglich, bei ausreichend hohen Temperaturen im Auspuff gezielte Explosionen von Treibstoff-Luftgemisch im Auspuff zu generieren und dadurch die akustische Wahrnehmbarkeit des Geräusches beim Zwischengas weiter zu verbessern.

Eine weitere Ausgestaltung des erfindungsgemäßen Verfahrens sieht vor, dass in der ersten Phase der Motor mit einem einstellbaren Minimalmoment betrieben wird, sofern das vom Getriebe geforderte Moment kleiner als das Minimalmoment ist.

Eine andere Ausgestaltung des erfindungsgemäßen Verfahrens sieht vor, dass in der dritten Phase ein später Zündzeitpunkt nur dann eingestellt wird und/oder in der vierten Phase ein oder mehrere Zylinder des Motors ausgeblendet werden, wenn keine Reserveanforderung vom automatischen Getriebe vorliegt, ein direkter Getriebedurchgriff vorliegt und ein gefordertes Getriebemoment größer ist als das vom Fahrer des Fahrzeugs vorgegebene Wunschmoment.

Beim erfindungsgemäßen Verfahren wird die zur Synchronisation erforderliche Drehzahl des Motors automatisch aus einer gemessenen Raddrehzahl und einer vorgegebenen Zielübersetzung berechnet.

Die Ausblendung eines oder mehrerer Zylinder erfolgt ebenfalls automatisch drehzahl- und gangabhängig beim Annähern der Drehzahl des Motors an die angestrebte Synchronisierdrehzahl. Dadurch wird am Ende des Schaltvorganges ein "Blubbern" erzeugt.

Beim erfindungsgemäßen Verfahren wird eine maximale Momentenreserve des Motors berechnet, die mit vorgebbaren Kennfeldern gewichtet wird, Über diese Wichtungen wird gang- und drehzahlabhängig die Höhe der Momentenreserve des Motors respektive die Lage des Zündwinkels, also der Zündzeitpunkt festgelegt.

Die Erfindung wird im Folgenden anhand eines Ausführungsbeispiels erläutert.

Dabei zeigen:
- Fig. 1: ein erstes Diagramm einer Zwischengasfunktion,
- Fig. 2: ein zugehöriges zweites Diagramm dieser Zwischengasfunktion mit Soundfunktion, und
- Fig. 3: ein zugehöriges zweites Diagramm dieser Zwischengasfunktion ohne Soundfunktion.

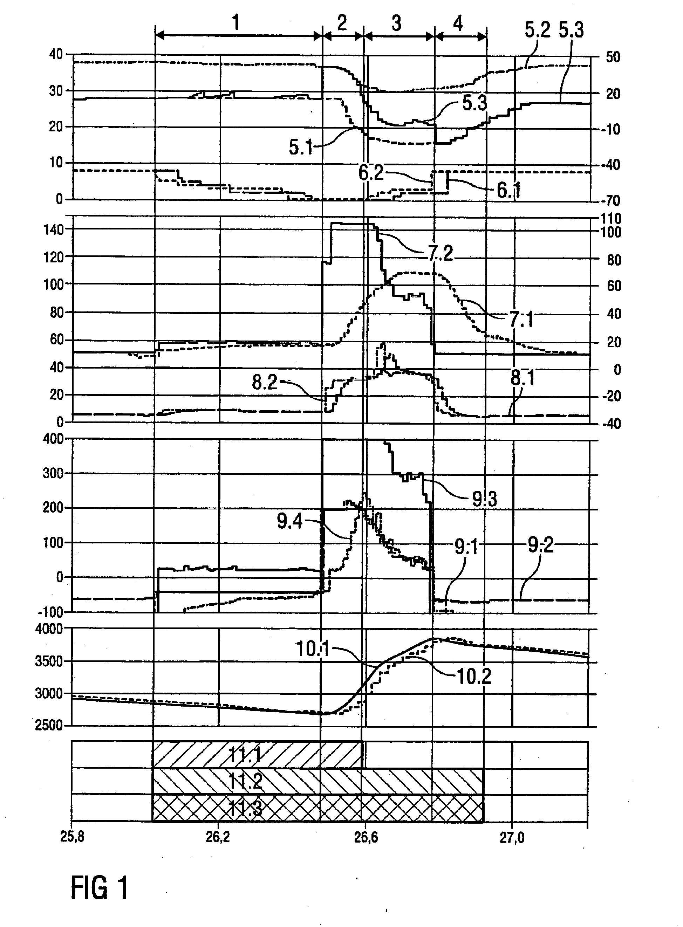

Figur 1 zeigt beispielhaft einen zeitlichen Verlauf eines Rückschaltvorganges mit automatischem Zwischengas, wobei verschiedene Parameter für die Zeitspanne zwischen 25,8 s und 27,2 s dargestellt sind. Von oben nach unten sind der zeitliche Verlauf eines Spätzündwinkels 5.1, eines Basiszündwinkels 5.2 und eines Istzündwinkels 5.3, der zeitliche Verlauf einer Istreduzierstufe 6.1 und einer Sollreduzierstufe 6.2, der zeitliche Verlauf einer Motorlast 7.1 und einer Solllast 7.2 des Motors, der zeitliche Verlauf eines Klappenwinkels 8.1 und eines Sollklappenwinkels 8.2 einer Drosselklappe, der zeitliche Verlauf eines Getriebemoments 9.1, eines Motor-Sollmoments 9.2, eines Reserve-Sollmoments 9.3 und eines Motor-Istmoments 9.4 sowie der zeitliche Verlauf einer Motordrehzahl 10.1 und einer Turbinendrehzahl 10.2 dargestellt. Die Zeitspannen, in denen ein Reservevorhalt 11.1, ein Min-Durchgriff 11.2 sowie ein Max-Durchgriff 11.3 gefordert werden, sind schraffiert dargestellt.

In einer ersten Phase 1, in der sich das Getriebe in seiner hydraulischen Totzeit befindet, wird das vom Motor gelieferte Motor-Istmoment 9.4 langsam gesteigert, bis das vom Getriebe geforderte Getriebemoment 9.1 erreicht ist. Der Sollklappenwinkel 8.2 und der tatsächliche Klappenwinkel 8.1 der Drosselklappe sind dabei kleiner als 10 %. Der Istzündwinkel 5.3 verläuft typischerweise zwischen etwa +10° und +20° Kurbelwellenwinkel, also wie üblich deutlich vor dem oberen Totpunkt. Die Motordrehzahl 10.1 und die Turbinendrehzahl 10.2 reduzieren sich langsam und kontinuierlich.

In einer zweiten Phase 2, die der Synchronisation dient, ist das vom Motor gelieferte Motor-Istmoment 9.4 noch kleiner als das Motor-Sollmoment 9.2, dessen Wert gleich dem Getriebemoment 9.1 ist. Die Drosselklappe wird in der zweiten Phase 2 weiter geöffnet. In dieser zweiten Phase 2 ist zur Erzielung eines schnellen Schaltvorganges ein schnellstmöglicher Aufbau des vom Motor gelieferten Motor-Istmoments 9.4 angestrebt, das Motor-Sollmoment 9.2 ist daher besonders groß. Das Motor-Istmoment 9.4 wird stetig größer, bis das Motor-Sollmoment 9.2 erreicht ist. In der zweiten Phase 2 ist das geforderte Reserve-Sollmoment 9.3 gegenüber der ersten Phase 1 besonders groß.

In einer dritten Phase 3, die wie die zweite Phase der Synchronisation dient und in der das Motor-Istmoment 9.4 das zur Synchronisation erforderliche Motor-Sollmoment 9.2 erreicht, ist ein sehr später Istzündwinkel 5.3 eingestellt, der Istzündwinkel 5.3 wird also auch im Verhältnis zur ersten Phase 1, in der der Zündzeitpunkt bereits relativ spät eingestellt ist, weiter in Richtung spät verschoben. Zum Ende der dritten Phase 3 wird der Istzündwinkel 5.3 in der dargestellten Ausführungsform auf -20° Kurbelwellenwinkel eingestellt. Durch diese starke Verschiebung des Zündwinkels in Richtung spät wird vom Motor ein akustisch deutlich wahrnehmbares Geräusch, ein verändertes Abgasgeräusch, das subjektiv als ein sehr sportlicher Sound empfunden wird, erzeugt. Dazu wird ein zusätzliches Reserve-Sollmoment 9.3 gefordert, dessen Wert im Verlauf der dritten Phase 3 typischerweise zwischen über 400 Nm und über 200 Nm beträgt.

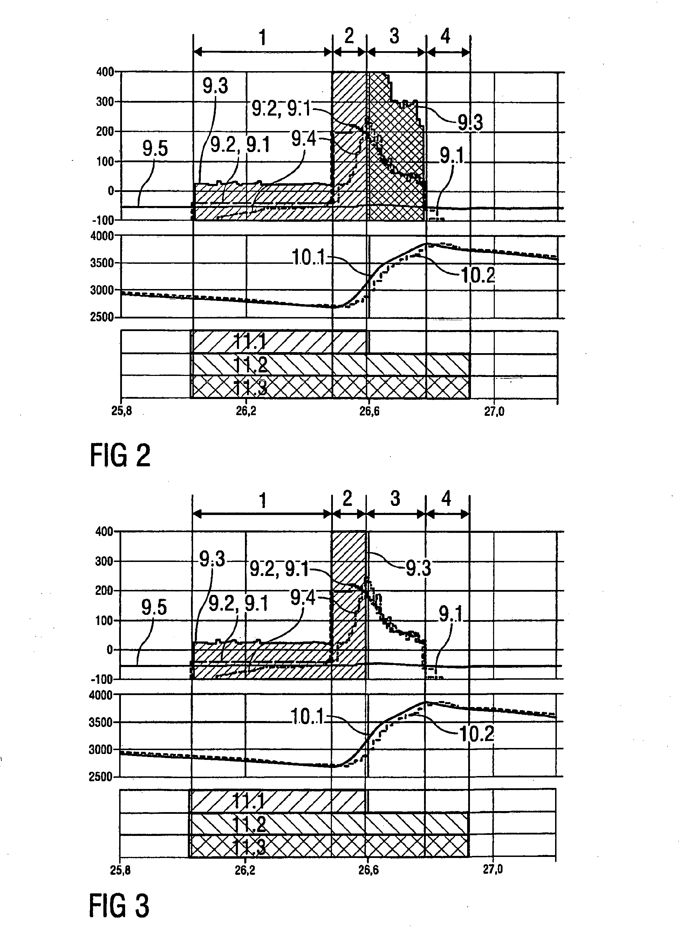

Figur 2 zeigt beispielhaft den in Figur 1 dargestellten zeitlichen Verlauf eines Rückschaltvorganges mit automatischem Zwischengas für die Zeitspanne zwischen 25,8 s und 27,3 s, wobei der zeitliche Verlauf des Getriebemoments 9.1, des Motor-Sollmoments 9.2, des Reserve-Sollmoments 9.3, des Motor-Istmoments 9.4 und eines Fahrervorgabemoments 9.5 sowie der zeitliche Verlauf der Motordrehzahl 10.1 und der Turbinendrehzahl 10.2 bei Zwischengas mit einer so genannten Soundfunktion dargestellt ist.

Die gezeigten Verläufe von Momenten 9.1 bis 9.2 und Drehzahlen 10.1 und 10.2 entsprechen den in Figur 1 dargestellten Verläufen, insbesondere betreffend die Verschiebung des Istzündwinkels 5.3 in Richtung spät und betreffend den Verlauf des zusätzlich geforderten Reserve-Sollmomentes 9.3. Für die erste Phase 1 und für die zweite Phase 2 ist die Fläche unterhalb des Verlaufes des Reserve-Sollmoments 9.1 einfach schraffiert dargestellt. Für die dritte Phase 3 ist die Fläche unterhalb des Verlaufes des Reserve-Sollmoments 9.1 gekreuzt schraffiert dargestellt. Dieser gekreuzt schraffierte Bereich stellt eine Momentenreserve aus der Soundfunktion dar.

Figur 3 zeigt beispielhaft den in Figur 2 dargestellten zeitlichen Verlauf eines Rückschaltvorganges ohne die Soundfunktion. Die dabei dargestellten Verläufe zeigen ein Verfahren ohne die erfindungsgemäße Verschiebung des Istzündwinkels 5.3 in Richtung spät in der dritten Phase 3 und ohne den erfindungsgemäßen Verlauf eines zusätzlich geforderten Reserve-Sollmomentes 9.3 in der dritten Phase 3 und mithin einen Verlauf für ein automatischen Zwischengas ohne das erfindungsgemäß bewirkte, akustisch deutlich wahrnehmbare Geräusch, das als verändertes Abgasgeräusch subjektiv als sehr sportliches Geräusch empfunden und auch als Soundfunktion bezeichnet wird. Für die erste Phase 1 und für die zweite Phase 2 ist die Fläche unterhalb des Verlaufes des Reserve-Sollmoments 9.1 ebenfalls einfach schraffiert dargestellt. Für die dritte Phase 3 ist das Reserve-Sollmoment 9.1 null.

### Bezugszeichenliste

- 1: erste Phase
- 2: zweite Phase
- 3: dritte Phase
- 4: vierte Phase
- 5.1: Spätzündwinkel
- 5.2: Basiszündwinkel
- 5.3: Istzündwinkel
- 6.1: Istreduzierstufe
- 6.2: Sollreduzierstufe
- 7.1: Motorlast
- 7.2: Solllast
- 8.1: Klappenwinkel
- 8.2: Sollklappenwinkel
- 9.1: Getriebemoment
- 9.2: Motor-Sollmoment
- 9.3: Reserve-Sollmoment
- 9.4: Motor-Istmoment
- 9.5: Fahrervorgabemoment
- 10.1: Motordrehzahl
- 10.2: Turbinendrehzahl
- 11.1: Reservevorhalt
- 11.2: Min-Durchgriff
- 11.3: Max-Durchgriff

## Patentansprüche

1. Verfahren zur Steuerung von Schaltvorgängen eines Kraftfahrzeugs mit einem Verbrennungsmotor und einem automatischen Getriebe, wobei zur Reduzierung und/oder Kompensierung eines Schalt-Ruckes bei einem Rückschaltvorgang automatisch Zwischengas gegeben wird, wobei in einer ersten Phase (1), in der sich das Getriebe in seiner hydraulischen Totzeit befindet, ein vom Motor geliefertes Motor-Istmoment (9.4) langsam gesteigert wird, bis ein vom Getriebe gefordertes Getriebemoment (9.1) erreicht wird, wobei anschließend in einer zweiten Phase, in der das Motor-Istmoment (9.4) kleiner ist als ein Motor-Sollmoment (9.2), eine Drosselklappe weiter geöffnet wird, wobei anschließend in einer dritten Phase (3), in der das Motor-Istmoment (9.4) das zur Synchronisation des Motors erforderliche Motor-Sollmoment (9.2) erreicht hat, ein später Istzündwinkel (5.3) eingestellt wird, **dadurch gekennzeichnet, dass** in einer vierten Phase (4) ein oder mehrere Zylinder des Motors ausgeblendet werden.

2. Verfahren nach Anspruch 1,
**dadurch gekennzeichnet, dass**
in der dritten Phase der eingestellte Istzündwinkel (5.3) zumindest zeitweise später als +5° KW und insbesondere zeitweise später als -10° KW beträgt.

3. Verfahren nach einem der vorhergehenden Ansprüche,
**dadurch gekennzeichnet, dass**
in der ersten Phase (1) der Motor mit einem einstellbaren Minimalmoment betrieben wird, sofern das vom Getriebe geforderte Getriebemoment (9.1) kleiner als das Minimalmoment ist.

4. Verfahren nach einem der vorhergehenden Ansprüche,
**dadurch gekennzeichnet, dass**
in der dritten Phase (3) ein später Istzündwinkel (5.3) nur dann eingestellt wird und/oder in der vierten Phase (4) ein oder mehrere Zylinder des Motors ausgeblendet werden, wenn keine Reserveanforderung vom automatischen Getriebe vorliegt, ein direkter Getriebedurchgriff vorliegt und ein gefordertes Getriebemoment größer ist als ein vom Fahrer des Fahrzeugs vorgegebenes Fahrervorgabemoment (9.5).

## Claims

1. Method for controlling shifting operations of a motor vehicle with an internal combustion engine and an automatic gearbox, wherein, in order to reduce and/or to compensate for a shifting jolt in a downshifting operation, intermediate gas is provided automatically, wherein, in a first phase (1) in which the gearbox is in its hydraulic dead time, an actual engine torque (9.4) delivered by the engine is slowly increased until a gearbox torque (9.1) demanded by the gearbox is reached, wherein, in a following second phase in which the actual engine torque (9.4) is lower than a desired engine torque (9.2), a throttle valve is opened wider, wherein, in a following third phase (3) in which the actual engine torque (9.4) has reached the desired engine torque (9.2) required for the synchronisation of the engine, a later actual ignition timing (5.3) is set,
**characterised in that**
one or more cylinders of the engine are blocked out in a fourth phase (4).

2. Method according to claim 1,
**characterised in that**
in the third phase, the set actual ignition timing (5.3) is at least temporarily later than +5° KW and in particular temporarily later than -10° KW.

3. Method according to any of the preceding claims,
**characterised in that**
in the first phase, the engine is operated with an adjustable minimum torque if the gearbox torque (9.1) demanded by the gearbox is lower than the minimum torque.

4. Method according to any of the preceding claims,
**characterised in that**
in the third phase (3), a later actual ignition timing (5.3) is only set, and/or in the fourth phase (4), one or more cylinders of the engine are only blocked out if there are no reserve demands from the automatic gearbox, if direct gearbox penetration is present and if a demanded gearbox torque is higher than a driver-set torque (9.5) preset by the driver of the vehicle.

## Revendications

1. Procédé de commande des opérations de changement de rapport d'un véhicule automobile équipé d'un moteur à combustion interne et d'une transmission automatique, dans lequel, afin de réduire et/ou de compenser un à-coup dans une opération de rétrogradation, un double débrayage est automatiquement commandé, dans une première phase (1), dans laquelle la transmission se trouvant à son point mort hydraulique, le couple réel (9.4) fourni par le moteur est lentement augmenté jusqu'à atteindre un couple (9.1) exigé par la transmission, ensuite, dans une deuxième phase dans laquelle le couple réel (9.4) du moteur est inférieur au couple de consigne (9.2) du moteur, un papillon d'étranglement continue de s'ouvrir, ensuite, dans une troisième phase (3), dans laquelle le couple réel (9.4) du moteur a atteint le couple de consigne (9.2) du moteur nécessaire pour sa synchronisation, un angle de came réel plus tardif (5.3) est sélectionné, **caractérisé en ce que** dans une quatrième phase (4) un ou plusieurs cylindre du moteur sont supprimés.

2. Procédé selon la revendication 1, **caractérisé en ce que** dans la troisième phase l'angle de came réel (5.3) réglé s'élève au moins par intermittence ultérieurement à +5° KW et en particulier partiellement ultérieurement à -10° KW.

3. Procédé selon l'une quelconque des revendications précédentes, **caractérisé en ce que** dans la première phase (1) le moteur fonctionne au moyen d'un couple minimum réglable, dans la mesure où le couple exigé par la transmission (9.1) est inférieur au couple minimum.

4. Procédé selon l'une quelconque des revendications précédentes, **caractérisé en ce que** dans la troisième phase (3) un angle de came (5.3) réel tardif est uniquement réglé et/ou dans la quatrième phase (4) un ou plusieurs cylindres sont supprimés, lorsqu'aucune exigence de réserver existe par la transmission automatique, un accès direct à la transmission existe et un couple de transmission exigé est supérieur à un couple préréglé (9.5) par le conducteur du véhicule.
